# EUROPEAN PATENT SPECIFICATION

(11) **EP 1 396 551 B1**
(45) Date of publication and mention of the grant of the patent: **02.01.2008**
(21) Application number: 02733260.0
(22) Date of filing: 30.05.2002
(51) Int. Cl.: C23G 1/24, B01D 21/26, B01F 3/12, C22B 1/00, B04B 1/18

(54) **DEVICE AND METHOD FOR TREATING OIL-ADHERED PARTICLES**
VORRICHTUNG UND VERFAHREN ZUR BEHANDLUNG VON TEILCHEN MIT ÖLANHAFTUNGEN
DISPOSITIF ET PROCEDE DE TRAITEMENT DE PARTICULES SOUILLEES D'HUILE

(30) Priority: 30.05.2001 JP 2001162702
(43) Date of publication of application: 10.03.2004
(73) Proprietor: Nippon Steel Corporation, Tokyo 100-8071 (JP)
(72) Inventor: IBARAKI, Tetsuharu, c/o NIPPON STEEL CORPORATION, Kimitsu-shi, Chiba 299-1193 (JP); YAMAMOTO, Takashi, c/o NIPPON STEEL CORPORATION, Kimitsu-shi, Chiba 299-1193 (JP); KONDO, Satoshi, c/o NIPPON STEEL CORPORATION, Kimitsu-shi, Chiba 299-1193 (JP); ABE, Yoshihiro, C/O NIIGATA WORTHINGTON CO., LTD, Kashiwazaki-shi, Niigata 945-0056 (JP); KATSUMI, Toshiki, c/o NIIGATA WORTHINGTON CO., LTD, Kashiwazaki-shi, Niigata 945-0056 (JP)
(74) Representative: Vossius & Partner
(86) International application number: PCT/JP2002/005309
(87) International publication number: WO 2002/097142

(56) References cited:
- WO-A-92/22620
- DE-A- 4 019 232
- DE-A- 4 204 926
- DE-A- 19 605 624
- FR-A- 2 324 746
- JP-A- 3 245 856
- JP-A- 53 002 383
- JP-A- 2000 355 718
- JP-A- 2001 234 256
- JP-A- 2002 001 396
- PATENT ABSTRACTS OF JAPAN vol. 0020, no. 46 (C-009), 28 March 1978 (1978-03-28) & JP 53 002383 A (NIPPON STEEL CORP; others: 01), 11 January 1978 (1978-01-11)

## Description

Present invention relates to an oil removal and water removal processing for metal scales covered with oil and water, which are produced in a process such as rolling, or of metal powder covered with oil, which is produced in metal grinding and polishing process in the iron manufacturing industry and the metal processing industry.

In the iron manufacturing industry and the metal processing industry, a large amount of powder material is produced such as cutting powder and grinding powder produced in the processing of metallic material having iron, aluminium, and copper, etc. as main components, or metal scales produced in heating or hot rolling processing of steel material, and powder of abrasives produced in surface processing of metals. These powder materials are sometimes covered or contaminated with oil used for surface lubrication in processing or for machine lubrication in a rolling process.

These powder materials produced with oil deposited thereon have particle diameters typically in the range of 2 µm ∼ several mm and have lubricating oil etc. deposited on the surface thereof. The amount of oil deposited on the surface varies generally in the range of 1 ∼ 10% by weight.

Examples of particles having oil deposited thereon include polishing and grinding powders produced in the processing of metal materials. For example, in the process of cutting metals, mineral oil or the like is poured onto the metal material for lubrication during the abrasive cutting, so that powder is produced with a large amount of oil deposited thereon. Particle diameter of the powder produced in polishing or grinding process is in the range of 0.1 ∼ several mm, and the amount of deposited oil is in the range of about 1 ∼ 10% by weight. The types of oil include water soluble oil and mineral oil.

When powders produced in polishing or grinding process (hereinafter referred to as grinding powder) are to be recycled as metal material, the oil deposited on them becomes an obstacle. In order to solve this problem, mainly, a wet type oil removal processing has been conducted conventionally. First, water is added to the grinding powder having oil deposited thereon to form a mixed slurry. A surface active agent is then added to the mixed slurry, and the oil deposited on the powder is transferred to water and mixed into it by thorough agitation. After draining water from the slurry in this state, the slurry is again washed with water to remove residual adhered oil. The grinding powder having deposited oil removed in this way has been used for recycling in metal fusion smelting furnaces such as electric furnaces or converters.

Scales produced during hot rolling process are generated in mechanical processing of steel slabs or metal slabs at high temperature. Scales are formed in such a process by oxidation of the surface of iron or other metals. For example, in hot rolling process of steel material, a steel slab is heated to 1100 ∼ 1200°C in a heating furnace and is rolled by metal rolls to form various sheet steels or shape steels. Relatively large amount of scales are generated from the surface of the steel slab in this process. The scales generated in such a process amount to 20 ∼ 50 kg per 1 tonne of steel material. Usually, in an operating step referred to as descaling, high pressure water is injected onto the surface of the steel material to remove the scales formed. Scales which are removed by the descaling step are collected together, with water, in a pit to be precipitated there.

On the other hand, in a rolling process of a metal, lubricating oil is used in order to allow smooth rotation and sliding of machine parts. A small amount of the lubricating oil inevitably leaks from joints of machine parts. The leaking lubricating oil is drained together with water used in the descaling and is collected in the pit.

As a result, both lubricating oil and scales flow into the pit. In the pit, coarse scales of size in the range of 0.2 ∼ several mm are first precipitated in the upstream part of the pit, where the amount of retained lubricating oil is small so that oil deposition on the scales is low, not greater than 0.4% by weight. On the other hand, fine scales of size less than 0.2 mm (average particle diameter of 2 ~ 75 µm) are precipitated in the downstream part of the pit. The lubricating oil is also accumulated together with the fine scales in the downstream part of the pit. As a result, the fine scales have 4 ∼ 10% by weight of lubricating oil adhered to the surface. As the scales are fine, they tend to attract more water to the surface. Consequently, when fine scales are recovered from the pit, water content is high, in the range of 40 ∼ 55% by weight. The large amount of water in addition to the oil also poses a problem for recycling of scales.

As coarse scales have a relatively small amount of oil and water adhered to the surface, they can be recycled with less problem as raw material for a blast furnace after processing in a sintering apparatus, or directly as raw material for an electric furnace. On the other hand, fine scales having oil such as lubricating oil adhered to the surface (hereinafter referred to as oily scales) are difficult to use, as they are, in recycling in a sintering apparatus or in an electric furnace, because the mixed oil evaporates or is burnt in the apparatus and generates waste gas that poses a difficult problem for disposal.

Thus, processing is performed to remove the oil adhered to the oily scales in order to allow them to be used in recycling. Two methods, a heating and burning method and a wet type method, can be used for this processing. In the heating and burning method, the oily scales are heated in a rotary kiln or the like to burn the oil. Sludge-like oily scales having water and oil adhered thereon are loaded into an internally burning type rotary kiln and are heated to 500 ∼ 900°C to burn and remove the adhered oil. In a conventional wet type processing, as disclosed in the sludge processing method of Japanese Patent Publication (Kokai) No. S51-91817, wet type oil separation is carried out by means of an aqueous solution having a surface active agent added thereto. The oily scales are mixed and stirred together with water containing a surface active agent and the like in a mixer tank so as to separate the adhered oil.

In conventional art, oil removal processing of oily grinding powder is mainly performed by using a wet type oil removal process. First, large amount of water is added to grinding powder having oil adhered thereto to form a slurry. Then, a surface active agent is added to this slurry and, by stirring, the oil adhered to the grinding powder is mixed into the water. With this operation, oil adhered to the grinding powder is dispersed in water and is removed by draining the water containing the dissolved oil. The grinding powder is further washed with water to largely remove the oil adhered to the grinding powder.

In this method, oil is removed by being washed away with a large amount of water. The volume of water required is about 10 ∼ 20 times the true volume of the particles. Therefore, a large amount of water contaminated with oil has to be processed. Thus, a large processing cost is required, after the oil is removed from the powder particles, for processing of the large amount of oil contaminated water.

Also, as a large amount of water is used for washing the powder particles, the amount of the surface active agent required to disperse the oil is large, leading to an increase in the processing cost. Thus, conventional method for removing oil from the grinding powder is not an economocal oil removal method.

There are also various problems in the conventional method of processing oily scales. First, in the method of burning oily scales, although the residual oil of the scales can be reliably reduced to 0.1% by weight or less, a complicated processing apparatus is required to process the contaminated waste gas produced by burning oil in the furnace, leading to the problem of high cost for processing waste gas and high construction cost of the apparatus. As the oily scales have large amount of water adhered thereto, which amounts to about 50% by weight, energy consumption for heat required to evaporate the water becomes large, leading to the problem of a large energy cost.

On the other hand, in a wet type oil separation method, for example a processing method of oil containing sludge as disclosed in JP-A-53-2383, the construction of a group of interlinked apparatuses such as an apparatus for mixing oily scales with an aqueous solution containing a surface active agent or the like, an oil separation apparatus, a tank for separating scales from water, etc., is required. Although the construction cost of these processing apparatuses is cheap compared to that in burning method, apparatuses of complicated construction are required and the equipment construction cost is still high. As in the oil removal from the grinding powder, a large amount of water, 10 ∼ 20 times the true volume of the scales, is required for separation of adhered oil. This means that a large amount of surface active agent is required and, as the surface active agent is expensive, the required processing cost becomes high. After oil removal, scales need to be dehydrated. As processing conditions of a dehydrator have not been adequately studied, moisture content of the fine scales after dehydration has been high.

Thus, although the wet type oil separation method is excellent in principle, there are several problems in the conventional art such as complicated construction and high running cost. As a result, although various methods have been proposed, this method has seldom been used in actual oil removal processing of oily scales. In particular, as processing conditions have not been established in conventional art for dehydration of fine particles of size about 10 µm or less, satisfactory oil removal and dehydration of fine scales has not been possible even if a centrifugal separation apparatus is used.

Japanese Patent Publication (Kokai) No. 2002-1396 discloses a method in which an iron-making sludge having solid component consisting essentially of ferrous oxide as the main component and containing also oil and water as other components is subjected to centrifugal separation to concentrate the solid component, and then the sludge having the solid component concentrated is dried to obtain dried sludge which can be utilized as an auxiliary raw material for a steel smelting process, and an example of centrifugal separation of slurry-like sludge at 900 ∼ 2000 G is shown.

In this method, however, the water content of the sludge having solid component concentrated exceeds 20%, and in order to be used as an auxiliary raw material for a steel smelting process, the concentrated sludge further requires drying process. Thus, energy is required for the drying process, leading to the problem of high energy cost

Therefore, there has been a need for a novel method which resolves above-described problems associated with the prior art and which can fully utilize the advantages of the wet type oil separation method. That is, there has been a need for a new technology for oil removal processing of oil-contaminated particles which has relatively simple apparatus construction and which permits processing to be performed at low cost.

The present invention has been made to resolve the above described problems, and can be achieved by the features defined in the claims.

The invention is described in detail in conjunction with the drawings, in which:
Fig. 1 is a view showing the relation between the product of centrifugal force in a centrifugal separation apparatus and length of stay time of fine scales in the apparatus and the oil removal ratio of the fine scales;
Fig. 2 is a view showing the overall construction of an apparatus according to an embodiment of the present invention for removing oil from fine scales having oil deposited thereon; and
Fig. 3 is a view showing an example of a centrifugal separation apparatus used in the present invention.

The present inventors have conducted an intensive study of the method for removing oil from particles of metal or metal compound (hereinafter simply referred to as particles) having oil mixed with water deposited thereon. As a result of this study, it has been found that oil removal from these particles can be achieved simultaneously with dehydration in a centrifugal separation apparatus under proper processing conditions, and that oil removal of these particles is possible with this method by wet type processing using a simple process construction and at low cost.

The present inventors have thus invented a novel method in which a slurry of oil-contaminated particles and water is agitated and stirred under a proper conditions and this slurry is separated into oil and water in a centrifugal separation apparatus of a type using no filter cloth. Experiments were conducted by the present inventors on fine scales with average particle diameter of 2 ~ 75 µm produced in a steel rolling process, a grinding powder of titanium with average particle diameter of 1 ∼ 50 µm produced in grinding, a grinding powder of a super-hard alloy with average particle diameter of 0.1 ~ 2 mm produced in grinding, and a powder of abrasives with average particle diameter of 10 ~ 100 µm, with oil deposited thereon, and on a mixture of iron powder with average particle diameter of 5 ~ 25 µm mixed with a mineral oil. It has been confirmed that the present invention functions effectively with all of these particles.

The present inventors have first clarified that, in order to efficiently remove oil and water from particles, it is important to agitate the slurry containing particles having oil deposited thereon under proper conditions and to dehydrate the slurry under proper conditions. Among conditions for agitating the slurry containing oil-deposited particles, the mixing ratio of particles and water and the magnitude of the agitating force are the most important conditions. The intensity of agitating the slurry and pH of the water as well as the presence of a surface active agent are also important requirements.

Before oil removal processing, it is necessary to agitate the slurry containing the oil-contaminated particles thoroughly to disperse the particles adequately. If the particles coagulate within the slurry, oil removal efficiency in subsequent processing in a centrifugal separation apparatus would be lowered. Therefore, the slurry must be made to contain the particle adequately dispersed therein. In order to disperse the particles adequately, it is necessary to increase the water content of the slurry. Namely, if the volumic ratio of water relative to the true volume of the particles is 350% or more, the oil-contaminated particles can be dispersed adequately by proper agitation. Therefore, a processing requirement according to the present invention is that the volume ratio of water relative to the true volume of the oil-contaminated particles be 350% or more to enable the particles to be dispersed adequately by mechanical agitation of the slurry. If the water content is 500% by volume or more relative to the true volume of the oil-contaminated particles, the particles can be dispersed well even under poor conditions for agitation. Therefore, the water content is more preferably 500% by volume or more relative to the true volume of the particles. In conventional wet type oil removal processing, the volume ratio of water relative to the true volume of particles has been in the range of 1000 ∼ 2000%. Thus, in the method according to the present invention, the water content of the slurry can be greatly reduced compared to the conventional method. Here, the true volume of the particles is defined as the total sum of the volumes of individual particles.

In order to disperse the particles adequately in the slurry, it is also important to provide proper conditions for mechanical agitation of the slurry. The greater the power for agitating the slurry, the better the particles can be dispersed in the slurry. The present inventors have found that, when volume ratio of water is 350% or more relative to the true volume of the particles, the particles can be dispersed adequately in the slurry if the power for agitating the slurry is 0.4 kilowatts or more per 1 cubic meter of the slurry.

The slurry having the particles well dispersed therein by the method as described above, is then subjected to oil removal processing and dehydration processing simultaneously in a centrifugal separation apparatus. In the centrifugal separation apparatus, the centrifugal force acts upon the entire slurry so as to press the particles of specific gravity greater than that of water in the direction away from the rotation axis. In this process, oil with specific gravity smaller than that of water is moved in the direction toward the rotation axis. In the centrifugal separation apparatus, subsequent to this step, the slurry is separated into a liquid mixture of oil and water and the solid component consisting of the particles.

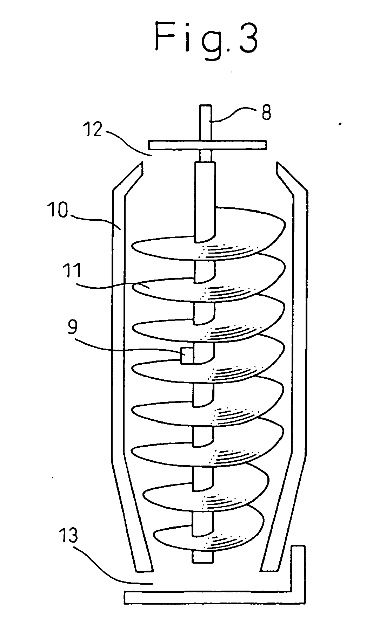

The present inventors have studied the effect of the magnitude of centrifugal force acting upon the slurry on the oil removal ratio of the particles in the centrifugal separation apparatus. An example of an experimental result obtained by the present inventors is shown. In the experiment conducted by using the centrifugal separation apparatus shown in Fig. 3, the centrifugal acceleration was varied from 200 times the gravitational acceleration G (9.8 m/s² = 1 G) (200 G) to 4,000 times the gravitational acceleration G (4,000 G) and oil deposition ratio of fine scales recovered from the centrifugal separation apparatus was studied. Outline of the apparatus shown in Fig. 3 will be described later. In an experiment in which fine scales having 6.4% by weight of oil deposited thereon were subjected to dehydration and oil removal, oil removal ratio was only 55% for 200 G. With this centrifugal force, the experiment in which the stay time of fine scales was extended showed little change in the oil removal ratio. On the other hand, for a centrifugal force of 300 G, although oil removal ratio was as low as 50 ∼ 60% when the stay time of the fine scales in the centrifugal apparatus was as short as 20 ∼ 30 seconds, the oil removal ratio was as high as 80% when the stay time was extended to 100 seconds. For a centrifugal force of 800 G or more, the oil removal ratio was as high as 70 ∼ 90% even with the short stay time, in the centrifugal separation apparatus, of several tens of seconds.

This phenomenon shows that, with too weak a centrifugal force, buoyancy of the oil cannot overcome the affinity between the oil and the fine scales so that oil removal cannot proceed even with extended stay time. On the other hand, with strong centrifugal force of 300 G or greater, oil removal from the particles can proceed with proper stay time.

As the stay time of the particles in the slurry in the centrifugal separation apparatus was also found to affect oil removal ratio from the particles, the present inventors next studied the effect of the stay time of the particles in the slurry in the centrifugal separation apparatus on the oil removal ratio. In the interior of the centrifugal separation apparatus, there are a portion where the centrifugal force acts upon the particles in the liquid so as to precipitate and concentrate them and another portion where accumulated particles are separated from the liquid. In view of such a mechanism of a centrifugal separation apparatus, in the case of the method of the invention, when particles precipitate in the liquid mixture of oil and water, strong centrifugal force acts so as to separate oil from the particles. Thus, in the portion where the slurry is held in the centrifugal separation apparatus, the oil layer, the water layer and the concentrated particle layer are formed nearer in this order to the rotation axis. The precipitation speed of the particles in the liquid in this case is affected both by the force acting upon the particles and oil (proportional to the centrifugal force) and by the length of stay time.

In the process of separation into solid phase and liquid phase, the pressure acting upon the liquid between particles is a factor which determines the flow speed of oil and water between particles, and the pressure is proportional to the centrifugal force. Also, in the process of separation into solid phase and liquid phase, the degree of separation of liquid is proportional to the time elapsed. Therefore, the product of the centrifugal force and the stay time of the particles in the centrifugal separation apparatus (hereinafter referred to as the centrifugal force - time product) is considered to be an important physical parameter affecting the oil removal ratio from the fine scales.

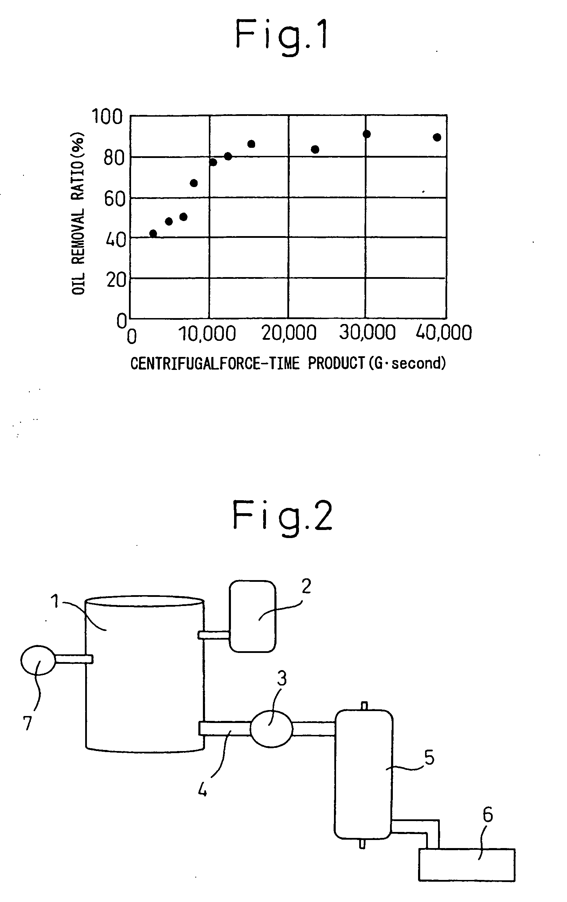

Therefore, the present inventors conducted experiments using a centrifugal dehydration apparatus to study the oil removal ratio for removing oil from the fine scales while varying the centrifugal force - time product in the range of centrifugal force of 300 ∼ 3,000 G that is effective for oil removal. Result of this experiment is shown in Fig. 1. As shown in Fig. 1, the oil removal ratio becomes high when the centrifugal force - time product exceeds about 8,000 G-second, and the oil removal ratio as high as 80 ∼ 85% was achieved when this product was 10,000 G-second or more. It was found that still better result was obtained for the centrifugal force - time product of 15,000 G-second or more, and above 20,000 ∼ 30,000 G-second, the effect of this product nearly saturated. Therefore, a requirement of the present invention is that, desirably, the centrifugal force - time product be 10,000 G-second or more. In the oil removal processing of oil-contaminated grinding powder or abrasive particles, the effect of the centrifugal force - time product on the oil removal conditions was also experimentally confirmed and a good oil removal ratio was obtained for the centrifugal force - time product of 10,000 G-second or more.

Also, under the condition that the centrifugal force - time product was 10,000 G-second or more, it was found that the particles discharged from the centrifugal separation apparatus had less water adhered to the particles. Thus, there is another advantage that the processing in the subsequent step becomes easier. For example, in the oil removal and dehydration processing of oil-contaminated fine scales with average particle diameter of 19 µm, under the conditions of centrifugal force of 1,000 G and the centrifugal force - time product of 11,000 G-second, the adhered water content of the fine scales became as low as 11% by weight, and it was confirmed that the subsequent drying process can be omitted and forming process, in a briquette forming apparatus, can be effectively performed.

However, the present inventors have found that stronger centrifugal force is required when oil removal and dehydration processing, from particles having particle diameter less than 12 µm, is to be performed. It has also been found that, when the particle diameter is small, oil removal and dehydration under the condition of weak centrifugal force of the present invention is insufficient as the specific surface area is large and oil is likely to be adhered to the surface and water is easily accumulated between particles. When dehydration and oil removal are to be performed from such fine particles, centrifugal force of 1500 G or more, desirably 2000 G or more, is required. It is also required, for good processing, that the centrifugal force-time product be not less than 20,000 G-second.

The present inventors next examined the effect of material properties of water in which particles were dispersed on the oil removal efficiency of particles. The effect of pH of the water was examined. As a result, it has been found that lubricating oil or the like deposited on scales can be more easily separated from particles in alkaline aqueous solution as the affinity between oil and water is improved.

Conditions that permit oil to be more easily separated from scales were sought by the present inventors. It has been found that, at pH of water above 8.5, oil becomes more easily separated, and at pH of 9 or higher, oil separation is good. Here, pH is a value showing hydrogen ion concentration in water, expressed as the common logarithm of the hydrogen ion concentration with its sign inverted.

In order to further improve the separation of oil in alkaline aqueous solution, it is desirable to add a surface active agent to water of pH 9 or higher. When mineral oil is to be removed from particles, it is effective to add a nonionic organic compound as a surface active agent. Useful nonionic organic compounds include nonyl ethylene oxides, nonyl phenol propylene oxides. The nonionic organic compound is particularly effective when added in an amount of 0.3% by weight or more relative to water. One advantage of the present invention is that, as the volume ratio of water used in processing is small relative to the true volume of particles, the required amount of the added surface active agent, if used, is also greatly reduced as compared to the amount required in conventional wet type oil removal method.

It is also effective to raise the temperature of the slurry in the centrifugal separation apparatus. This is because, at higher temperature, the viscosity of oil is lowered, and this facilitates separation of oil from the particles. At a higher temperature of the slurry, the viscosity of water is also lowered and this is also effective in separating water easily from the particles. The present inventors have confirmed from experiments that this effect can be obtained at temperature of 50 °C or higher. In particular, when oil removal ratio is to be improved, the temperature of the slurry is preferably 80°C or higher.

Next, the present inventors also studied the method of performing oil removal processing from particles having water soluble oil deposited thereon in a centrifugal separation apparatus according to the method of the present invention. As water soluble oil has high affinity with water, there is no problem in performing oil removal under the conditions of the present invention by preparing the slurry containing particles well dispersed therein, and by providing conditions which permit separation to solid phase and liquid phase to be achieved adequately. That is, oil removal can be performed satisfactorily if water is mixed in an amount of 350% by volume relative to the true volume of particles at the time of agitation and is agitated thoroughly and if magnitude of the centrifugal force in the centrifugal separation apparatus is 300 G or higher. Also, the centrifugal force-time product needs to be equal to or higher than the proper value of 10,000 G-second. It is also effective to raise the temperature of the slurry to 50°C or higher.

Now, an example of the apparatus for implementing the method of the present invention is shown in Fig. 2, and the apparatus and method for removing oil from the oil-contaminated particles according to the present invention will be described. This apparatus is composed mainly of a slurry agitation tank 1, an additive supply apparatus 2, a slurry conveying pump 3, a slurry pipeline 4, a centrifugal separation apparatus 5, a water-oil separation apparatus 6, and a water adding apparatus 7.

First, in the slurry agitation tank 1, a slurry is formed from particles of metal or metal compound having oil deposited thereon in an amount of 1 ∼ 10% by weight and water. In this slurry, the volume ratio of water relative to the true volume of particles must be 350% or more. In case where efficient agitation of the slurry is not possible, the volume ratio of water is more desirably 500% or more.

This slurry is thoroughly agitated in the slurry agitation tank 1. The method of agitating the slurry may be any of the known methods of agitation such as agitation by means of an impeller, agitation using a water jet injection, or bubbling of air from the bottom of the agitation tank 1. In any case, in order to provide good agitation, the power for agitating slurry is preferably not less than 0.4 kilowatts per 1 cubic meter of slurry.

If necessary, an alkaline source is added to the slurry using the additive supply apparatus 2. Any alkaline source may be utilized. However, aqueous solution of soda ash, sodium silicate, sodium phosphate, sodium metasilicate, or slaked lime may be used economically. When pH of the slurry water in the slurry agitation tank 1 is raised to 9 or higher by adding the alkaline source, the effect of oil removal becomes greater. The additive supply apparatus 2 is also used to add a surface active agent.

The slurry conveying means are composed basically of the slurry pipeline 4 and the slurry conveying pump 5, and it conveys the slurry which has been thoroughly agitated in the slurry agitation tank 1 through the slurry pipeline 4 to the centrifugal separation apparatus 5. The power for conveying the slurry is provided by the slurry conveying pump 3.

In the centrifugal separation apparatus 5, the slurry is separated into solution component that contains relatively more water and oil, and particles that have water and oil deposited thereon in a reduced ratio. Any centrifugal separation apparatus 5 of a type using no filter cloth may be used. It is necessary that the generated centrifugal acceleration be 300 times or more of the gravitational acceleration. A centrifugal separation apparatus with no filter cloth is used in the present invention because the slurry processed according to the method of the present invention contains oil which may give rise to the problem of clogging of the filter cloth if a centrifugal separation apparatus with filter cloth is used.

There are several types of centrifugal separation apparatus, and among them, as disclosed in Japanese Patent Publication (Kokai) No. 09-215946 and Utility Model, Registration Gazette No. 3024355, and the like, a centrifugal separation apparatus of the construction shown in Fig. 3 is the most suitable to be used in the present invention.

The centrifugal separation apparatus is composed of a slurry supply pipe 8, a slurry supply port 9, a cylindrical outer tube 10 capable of being rotated at high speed, a discharge screw 11 that scrapes out the powder precipitated on the internal surface of the outer tube 10, a liquid discharge portion 12 for discharging liquid after separation, and a powder discharge port 13. The outer tube 10 has a taper that becomes narrower toward the powder discharge port 13. The outer tube 10 is rotated at a high rate of 1,200 ~ 4,000 rotations per minute to generate a centrifugal force of 300 ~ 3,000 G. The rate of rotations differs between the outer tube 10 and the discharge screw 11, the difference being about 1 ∼ 30 rotations per minute.

When, among the various types of centrifugal separation apparatus as described above, the centrifugal separation apparatus shown in Fig. 3 is used with the rotation axis of the outer tube 10 directed in a generally vertical direction, that is, in the direction of the action of gravitational force, the effect of the present invention is maximized. When rotation axis is directed in generally vertical direction, the supply of the slurry from the slurry supply port 9 becomes generally uniform over the entire circumference of the outer tube 10. As a result, change of dispersion state of particles when the slurry impinges upon the outer tube 10 can be effectively minimized. In addition, when the volume ratio of water adhered to particles becomes less, a vertical type centrifugal separation apparatus 5 is advantageous in that the discharge of particles from the powder discharge port 13 can be thereby more easily carried out. As this type of centrifugal separation apparatus eliminates the problem of deformation of the apparatus due to gravitational force, dimensional accuracy in mounting machine parts is high, so that excellent performance in separation into solid and liquid phases can be achieved. The direction of the rotation axis is preferably within the angle difference of 25° from the direction of action of gravitational force.

The slurry containing oil-deposited particles is conveyed through the slurry supply pipe 8, and is discharged from the slurry supply port 9 into the interior of the outer tube 10. As a centrifugal force acts upon the outer tube 10, the slurry is pressed against the internal surface of the outer tube 10. As the particles to be processed according to the method of the present invention generally have large true specific gravity of 3 ∼ 8 kg/liter, the particles are precipitated by the action of the centrifugal force toward the internal surface of the outer tube 10. As water and oil have smaller specific gravities, of about 1 kg/liter, they are moved away from the internal surface of the outer tube 10 toward the rotation center, so as to separate the particles from water and oil, and as oil has specific gravity of about 0.9 kg/liter, and is thus lighter than water, oil floats in a position farther than water layer away from the internal surface of the outer tube 10. This water-oil mixture flows between blades of the discharge screw 11 in upward direction in Fig. 3, that is, in the direction toward the liquid discharge portion 12. On the other hand, the fine scales which are precipitated on the internal surface of the outer tube 10 are scraped out by the discharge screw 11 in the downward direction in Fig. 3. As a result, the particles are separated from the liquid in the taper portion of the outer tube 10. Thereafter, the particles are discharged from the powder discharge port 13.

In the interior of the centrifugal separation apparatus 5, the oil deposited on the particles is removed by the separating operation which separates liquid from the particles for the duration of stay time of particles of 10 ∼ 300 seconds. The duration of the stay time of particles is adjusted by the speed difference between the discharge screw 11 and the outer tube 10.

Generally, a speed difference of 1 rotation per minute corresponds to the duration of the stay time of particles of about 300 seconds, and speed difference of 30 rotations per minute corresponds to the duration of the stay time of particles of about 10 seconds. If the speed difference is within this range, the centrifugal force-time product is 10,000 G-second or more.

After this processing, oil removal ratio of the particles is 70 ∼ 90%, and content of water adhered to particles is 4 ∼ 18% by weight, and, in a conventional wet type oil removal processing with comparable oil removal ratio, content of water adhered to particles after processing is 20 ~ 50% by weight. Therefore, the present invention is advantageous in that the content of water adhered to particles obtained by the method of the present invention is greatly reduced. Thus, the particles obtained in the present invention can be used for recycling without subsequent drying process.

The liquid mixture of water and oil that has been separated from particles in the centrifugal separation apparatus 5 is transferred to the water-oil separation apparatus 6, where water is separated from oil. As the separated water contains effective components such as alkaline compounds and additives, part of the separated water may be returned to the slurry agitation tank 1. The oil separated in the water-oil separation apparatus 6 is reused or is processed as waste oil.

### Examples

Three types of powder, namely, oily scales, grinding powder of titanium, and grinding powder of steel, having oil deposited thereon, were processed using the apparatus and method of the present invention. The result is shown in Table 1. Result of the processing performed outside the conditions of the present invention is also shown in Table 1 as Comparative examples. Overall construction of the apparatus for processing these particles is shown in Fig. 2, and the type of the centrifugal separation apparatus is shown in Fig. 3.

Result of the processing operation in which fine scales having oil for rolling deposited in an amount of 6.4% by weight were subjected to oil removal and dehydration processing is shown as Example 1 ~ 3. The average particle diameter of the fine scales was 19 µm, and the content of water adhered to particles was 57% by weight.

**Table 1**

| | | Unit | Example 1 | Example 2 | Example 3 | Example 4 | Example 5 | Example 6 | Example 7 |
|---|---|---|---|---|---|---|---|---|---|
| Particle type | | | Scale | Scale | Scale | Scale | Scale | Ti Powder | Steel grind. powder |
| Conditions of raw material | | | | | | | | | |
| | Average particle diameter | µm | 19 | 19 | 19 | 19 | 6.8 | 7 | 150 |
| | Oil-deposition ratio | wt % | 6.4 | 6.4 | 6.4 | 6.4 | 9.7 | 8.8 | 7.9 |
| Conditions of slurry | | | | | | | | | |
| | Ratio of water to particles | vol % | 420 | 420 | 450 | 450 | 425 | 600 | 680 |
| | Power of agitation per 1 cubic meter of slurry | kW | 0.58 | 0.58 | 0.55 | 0.55 | 0.55 | 0.55 | 0.92 |
| | pH | | 8.1 | 8.1 | 10.6 | 10.6 | 8.3 | 8.3 | 9.5 |
| | Surface active agent | | no | no | no | Nonyl ethylene oxide | no | no | no |

| Conditions of centrifugal separation | | | | | | | | | |
|---|---|---|---|---|---|---|---|---|---|
| | Centrifugal force | G | 1000 | 1000 | 1000 | 1000 | 2500 | 2000 | 2000 |
| | Stay time of particles | second | 9 | 24 | 22 | 22 | 18 | 12 | 19 |
| | Centrifugal force-time product | G-sec | 9000 | 24000 | 22000 | 22000 | 45000 | 24000 | 38000 |

| State of particles after processing | | | | | | | | | |
|---|---|---|---|---|---|---|---|---|---|
| | Oil-deposition ratio | wt % | 1.6 | 1.1 | 0.78 | 0.37 | 1.3 | 1.1 | 0.8 |
| | Oil removal ratio | % | 75 | 83 | 88 | 94 | 87 | 88 | 90 |
| | Ratio of adhered water | wt % | 12 | 8 | 9 | 8 | 11 | 7 | 4 |

| | | | | | | | | | |
|---|---|---|---|---|---|---|---|---|---|
| * Examples 1, 2, 3, 4 and 7 are outside the invention. | | | | | | | | | |

In the operation of Example 1, the slurry composed of pH-unadjusted water and fine particles was processed. In the slurry agitation tank 1, the volume ratio of water relative to the true volume of particles was adjusted to 420% by volume. Agitation of the slurry in the slurry agitation tank 1 was performed by using an impeller to form a downward flow in the center portion of the slurry agitation tank 1. Power for agitation was 0.58 kilowatts per 1 cubic meter of the slurry. Upon completion of this agitation, the slurry was fed to the centrifugal separation apparatus 5. In the centrifugal separation apparatus 5, centrifugal force acting upon particles was 1,000 G, and average stay time of particles in the centrifugal separation apparatus 5 was 9 seconds. Thus, the centrifugal force-time product was 9,000 G-second.

After this processing, oil-deposition ratio of fine scales was 1.6% by weight and oil removal ratio was 75%. Ratio of adhered water of fine scales was 12% by weight. Thus, a good oil removal ratio and a good dehydration ratio were achieved even when a pH-unadjusted slurry was processed.

In the operation of Example 2, the slurry composed of pH-unadjusted water and fine scales was processed under the condition of the centrifugal force-time product of 10,000 G-second or more. Conditions of particles, volume ratio of water of the slurry and conditions for agitation of the slurry, were same as in Example 1. On the other hand, the centrifugal force acting upon particles in the interior of the centrifugal separation apparatus 5 was 1,000 G, and average stay time of particles in the interior of the centrifugal separation apparatus 5 was 24 seconds, so that the centrifugal force-time product was 24,000 G-second.

After this processing, oil-deposition ratio of fine scales was 1.1 % by weight and oil removal ratio was 83%. Ratio of adhered water of fine scales was 8% by weight. This result was better than that in Example 1. Thus, a good oil removal ratio and a good dehydration ratio were achieved even when pH unadjusted slurry was processed.

Next, as Example 3, an exemplary operation is shown in which pH of the slurry containing oil-deposited fine scales was adjusted to 10.6 using a mixture of soda ash and sodium metasilicate. Conditions of the fine scales were same as in Examples 1 and 2. In the slurry agitation tank 1, volume ratio of mixed water relative to the true volume of particles was 450% by volume and the power for agitating the slurry was 0.55 kilowatts per 1 cubic meter of the slurry. Conditions of processing in the centrifugal separation apparatus 5 were that centrifugal force was 1,000 G and average stay time of fine scales in the interior of the centrifugal separation apparatus 5 was 22 seconds, so that the centrifugal force-time product was 22,000 G-second.

As a result, after this processing, oil-deposition ratio of fine scales was 0.78% by weight and oil removal ratio was 88%. Ratio of adhered water of fine scales was reduced to 9% by weight. Thus, by raising pH of water in the slurry, still better removal ratio was achieved.

Next, nonyl ethylene oxide was added in an amount of 0.7% by weight to the water of the slurry containing oil-deposited fine scales shown in Example 3. Result of processing is shown as Example 4. The pH of the water, conditions of agitation in the slurry agitation tank 1, and processing conditions in the centrifugal separation apparatus 5 were same as in Example 1. As a result, oil-deposition ratio of the fine scales after processing was 0.37% by weight, and ratio of adhered water was reduced to 8% by weight.

Fine scales obtained from the processing in Examples 1 to 4 were mixed with powder iron ore and were used in an iron ore sintering process in an iron-making factory. There was no problem in the operation and all samples could be used as sintered ore material for a blast furnace.

An example in which fine scales of small particle diameter was processed is shown as Example 5. Particle diameter of the fine scales was 6.8 µm and oil-deposition ratio was 9.7% by weight. Conditions for mixing with water and agitation were generally same as in Example 1. As the particle diameter was small, satisfactory oil removal and dehydration was not possible with centrifugal force of 300 ∼ 1500 G. Therefore, centrifugal force of 2500 G and stay time of particles in the centrifugal separation apparatus of 18 seconds were chosen so that the centrifugal force-time product was 45,000 G-second. After this processing, oil-deposition ratio of the fine scales became 1.3% by weight and oil removal ratio was 87%. In the case of scales of such fine particle, an oil removal ratio achieved in general oil removal and dehydration processing, using a centrifugal separation apparatus, is about 50 ∼ 70%. Ratio of adhered water was also reduced to 11% by weight.

Thus, an oil removal ratio that greatly exceeds that in prior art was achieved. Result of processing of oil-deposited titanium powder is shown as Example 6. Average particle diameter was 7 µm and lubricating oil was deposited in an amount of 8.8% by weight. In the slurry agitation tank 1, 600% by volume of water relative to the true volume of particles was mixed to form the slurry. Conditions of agitation of the slurry was that power for agitating the slurry was 0.55 kilowatts per 1 cubic meter of the slurry. Neither an alkaline source nor a surface active agent were added to the water of the slurry. Conditions of processing in the centrifugal separation apparatus 5 were that centrifugal force was 2,000 G and average stay time of fine scales in the centrifugal separation apparatus 5 was 12 seconds, so that the centrifugal force-time product was 24,000 G-second.

As a result, the oil-deposition ratio of fine titanium powder after processing was 1.1% by weight and oil removal ratio was 88%. Ratio of adhered water was reduced to 7% by weight and the fine powder could be used as titanium raw material after a simple processing.

The result of processing of grinding powder of steel material is shown as Example 7. Average particle diameter was 150 µm and water soluble oil was deposited in an amount of 7.9% by weight. In the slurry agitation tank 1, water was mixed in volume ratio of 680% relative to the true volume of particles to form the slurry. The slurry was agitated with agitation power of 0.92 kilowatts per 1 cubic meter of slurry.

Neither an alkaline source nor a surface active agent were added to the water of the slurry. The slurry was processed in the centrifugal separation apparatus 5 under conditions that the centrifugal force was 2,000 G and average stay time of fine scales in the centrifugal separation apparatus 5 was 19 seconds so that the centrifugal force - time product was 38,000 G-second.

As a result, oil deposition ratio of the steel grinding powder after processing was 0.8% by weight, so that the oil removal ratio was 90%. Ratio of adhered water was reduced to 4% by weight. The recovered grinding powder was used as raw material for iron making in an electric furnace as it was.

The result of oil removal processing in which oil was removed from fine scales using conventional method for oil removal from particles is shown as Comparative example. Processing method was wet type processing using a surface active agent. Fine scales were same as those used in Example 1 to 4.

In this processing, 1400% by volume of water relative to the true volume of particles was mixed in the mixer tank to form the slurry. Mixture of soda ash and sodium meta silicate was added to this slurry to adjust pH to 11.6. Nonyl ethylene oxide was also added to the water in an amount of 0.67% by weight relative to water. After thus adjusting pH to a higher value and adding the surface active agent, the slurry was agitated. After agitation, the slurry was transferred to another tank and was left at rest there to allow oil to float up on the surface. The float-up time was about 12 minutes. Then, bottom portion of the slurry where more particles accumulated was extracted and was concentrated using a thickener for precipitation. Then, precipitation and dehydration processing was performed in a pit.

Oil deposition ratio of the fine scales after this processing was 0.9% by weight, and ratio of adhered water was 37% by weight. Thus, oil removal ratio comparable to Example 3 was technically possible with this Comparative example. However, dehydration was insufficient, so that drying process is further required after this processing. Although oil removal ratio in the Comparative example was as high as that in Examples of the present invention, amount of the alkaline source and the surface active agent was about three times that in Example 4, and processing cost was 5 times the processing cost in Example 3 and 2.5 times that in Example 4. Thus, although oil removal from particles was technically possible using prior art, there was a problem of increased cost. In accordance with the method of the present invention, oil removal processing was possible at running cost of 20 ∼ 40% of the processing cost in prior art.

By using the method and apparatus of the present invention, it is possible, without burning, to remove oil from particles of metal or metal compound having oil deposited thereon. In accordance with the method of the present invention, more economical oil removal processing is possible, which utilizes an apparatus of simpler construction at a cheaper running cost, than in the prior art.

## Claims

1. A method for processing oil-contaminated particles, comprising the steps of: mixing powder particles of metal or metal compound having an average particle size of 12 µm or less and oil deposited thereon with 350% or more by volume of water relative to the true volume of the powder particles to form slurry; processing the slurry, after agitating the slurry in a slurry agitation tank, in a centrifugal separation apparatus by causing a centrifugal acceleration not less than 1500 times the gravitational acceleration to act upon the slurry, wherein the centrifugal force-time product acting upon the slurry in said centrifugal separation apparatus is not less than 10,000 G-second, and wherein the agitation power per 1 cubic meter of said slurry in said slurry agitation tank is not less than 0.4 kilowatts.

2. A method for processing oil-contaminated particles according to claim 1, wherein the centrifugal force-time product acting upon the slurry in said centrifugal separation apparatus is not less than 20,000 G-second.

3. A method for processing oil-contaminated particles according to claim 1 or 2, wherein water at a pH of 9 or higher is mixed with said powder particles of metal or metal compound having oil deposited thereon to form fluidized slurry, and after agitation of the slurry, the slurry is processed in said centrifugal separation apparatus.

4. A method for processing oil-contaminated particles according to claim 3, wherein a surface active agent is added to said water at a pH of 9 or higher.

5. A method for processing oil-contaminated particles according to any one of claims 1 to 4, wherein temperature of said slurry is raised to not lower than 50°C to be processed in said centrifugal separation apparatus.

## Patentansprüche

1. Verfahren zum Verarbeiten von mit Öl kontaminierten Teilchen mit den Schritten: Vermischen von Pulverteilchen aus Metall oder einer Metallverbindung zum Ausbilden einer Aufschlämmung, die eine mittlere Teilchengröße von 12 µm oder weniger haben und auf denen Öl abgeschieden ist mit mindestens 350 Vol.-% Wasser bezogen auf das tatsächliche Volumen der Pulverteilchen; Verarbeiten der Aufschlämmung nach dem Verrühren der Aufschlämmung in einem Aufschlämmrührbehälter in einer Zentrifugaltrennvorrichtung durch Einwirken einer Zentrifugalbeschleunigung von mindestens dem 1500-fachen der Gravitationsbeschleunigung auf die Aufschlämmung, wobei das Produkt aus Zentrifugalkraft und Zeit, das auf die Aufschlämmung in der Zentrifugaltrennvorrichtung einwirkt, mindestens 10.000 G x sec beträgt und wobei die Rührleistung pro 1 Kubikmeter Aufschlämmung in dem Aufschlämmungsrührbehälter mindestens 0,4 kW beträgt.

2. Verfahren nach Anspruch 1, wobei das Produkt aus Zentrifugalkraft und Zeit, das auf die Aufschlämmung in der Zentrifugaltrennvorrichtung einwirkt, mindestens 20.000 G x sec beträgt.

3. Verfahren nach Anspruch 1 oder 2, wobei Wasser mit einem pH-Wert von mindestens 9 mit den Pulverteilchen aus Metall oder einer Metallverbindung, auf denen Öl abgeschieden ist, zum Ausbilden einer fluiden Aufschlämmung vermischt wird und wobei nach dem Rühren der Aufschlämmung diese in der Zentrifugaltrennvorrichtung weiterverarbeitet wird.

4. Verfahren nach Anspruch 3, wobei ein oberflächenaktives Agens dem Wasser bei einem pH-Wert von mindestens 9 zugegeben wird.

5. Verfahren nach einem der Ansprüche 1 bis 4, wobei die Temperatur der Aufschlämmung auf mindestens 50°C zum Weiterverarbeiten in der Zentrifugaltrennvorrichtung erhöht wird.

## Revendications

1. Procédé pour traiter des particules contaminées par de l'huile, comprenant les étapes consistant à : mélanger des particules de poudre de métal ou de composé métallique ayant une taille particulaire moyenne de 12 µm ou moins et avec de l'huile déposée sur celles-ci avec 350 % ou plus par volume d'eau par rapport au véritable volume des particules de poudre pour former une pâte ; traiter la pâte, après avoir agité la pâte dans un réservoir d'agitation de pâte, dans un appareil de séparation centrifuge en provoquant une accélération centrifuge non inférieure à 1 500 fois l'accélération gravitationnelle, pour agir sur la pâte, dans lequel le produit centrifuge force-temps agissant sur la pâte dans ledit appareil de séparation centrifuge n'est pas inférieur à 10 000 G-secondes et dans lequel la puissance d'agitation pour 1 mètre cube de ladite pâte dans ledit réservoir d'agitation de pâte est non inférieure à 0,4 kilowatts.

2. Procédé pour traiter des particules contaminées par de l'huile selon la revendication 1, dans lequel le produit centrifuge force-temps agissant sur la pâte dans ledit appareil de séparation centrifuge n'est pas inférieur à 20 000 G-secondes.

3. Procédé pour traiter des particules contaminées par de l'huile selon la revendication 1 ou 2, dans lequel l'eau à un pH de 9 ou plus est mélangée avec lesdites particules de poudre de métal ou de composé métallique ayant de l'huile déposée sur celles-ci pour former de la pâte fluidisée, et après agitation de la pâte, la pâte est traitée dans ledit appareil de séparation centrifuge.

4. Procédé pour traiter des particules contaminées par de l'huile selon la revendication 3, dans lequel un agent actif de surface est ajouté à ladite eau à un pH de 9 ou plus.

5. Procédé pour traiter des particules contaminées par de l'huile selon l'une quelconque des revendications 1 à 4, dans lequel la température de ladite pâte est élevée à une valeur non inférieure à 50°C pour être traitée dans ledit appareil de séparation centrifuge.
